# EUROPEAN PATENT APPLICATION

(11) **EP 1 589 720 A1**
(43) Date of publication of application: **26.10.2005**
(21) Application number: 05102725.8
(22) Date of filing: 07.04.2005
(51) Int. Cl.: H04L 29/06, H04L 12/14

(54) **Content providing in a telecommunications system**

(30) Priority: 20.04.2004 FI 20045139
(71) Applicant: TeliaSonera Finland Oyj, 00510 Helsinki (FI)
(72) Inventor: Pätynen, Markku, 01480, Vantaa (FI); Hakalin, Jari, 00920, Helsinki (FI)
(74) Representative: Äkräs, Tapio Juhani

(57) **Abstract**

The application describes a method and a system for invoicing a user for the usage of a content service offered by a content provider in a telecommunications system (S). According to the application, a network operator, instead of the content provider, is responsible for collecting user-specific data of the user (UE) receiving the content service. Based on said data, the network operator generates a charging record. The user may have a contract with the network operator, and the network operator charges the user according to the respective charging record and the eventual contract. Based on the charging record, the network operator is able to pay compensation to the content provider.

## Description

### FIELD OF THE INVENTION

The application relates to content providing in a telecommunications system and more particularly to charging a user for the use of the content.

### BACKGROUND OF THE INVENTION

Broadband technology enables users to gain access to high-speed digital technology, such as integrated access to voice, high-speed data transmission, video conference and video-on-demand services. In order to be able to utilize the technology, suitable service providers and services with suitable prices should appear on the markets. Content providing in a telecommunications system generally means the production of data that is to be provided as a service or data product to a client. A content provider is a service provider producing the service or data as a telecommunications service. The content provider creates and/or delivers digital content of various types and different and online services in a telecommunications network, such as the Internet. The client may be a private person or a company with access to the network by means of terminal equipment. The client is typically charged for the use of the content service such that the client pays for a predetermined period of usage time (e.g. days, a month, etc.) to the content provider. Alternatively the client pays a certain amount of money for a certain content item that s/he wishes to gain access to. These charging principles are based on a contract between the client and the content provider. The client typically makes the payment with a credit card.

One of the problems associated with the above arrangement is that the content provider has to set up a billing system, which may be complex and impractical both to the client and the content provider. Only charging for a predetermined time or amount of data is usually viable. Paying with a credit card in the Internet further involves a security risk, and thus the clients may rather avoid using of the content service. These aspects may, for their part, delay the introduction of modern telecommunications content services.

### BRIEF DESCRIPTION OF THE INVENTION

An object of the present invention is to provide a method and an arrangement for implementing the method so as to overcome the above problems. The objects of the invention are achieved by a method, system, and a server unit, which are characterized by what is stated in the independent claims. Embodiments of the invention are disclosed in the dependent claims.

The solution of the present application is based on the idea of invoicing a user for the usage of a content service offered by a content provider in a telecommunications system such that a network operator, instead of the content provider, is responsible for collecting the charging data of the usage of the content service. Based on the collected data the network operator generates a charging record, by means of which the network operator is able to charge the user of the content service. The network operator pays compensation to the content provider according to the respective charging record. The network operator may also act as the content provider, in which case the terms "network operator" and "content provider" may refer to different internal roles of different divisions inside the same company, for example.

An advantage of the method and arrangement of the present solution is that a network operator may offer the user an easy access to content services while the user does not have to have a specific contract with the content provider. He/she may only need to have an agreement with the network operator for providing a network connection to the user. The present solution provides a secure way for invoicing the user for using the content service. The invoice may be included in a normal telephone bill, for example, and thus the user does not have to send his/her credit card number through the network. Thus eventual misuses of the credit card may be avoided. The user is also able to use content services anonymously such that the content provider does not know the personal data of the user. Further the content provider does not have to set up any complex billing systems but can utilize the system of the network operator.

### BRIEF DESCRIPTION OF THE DRAWINGS

In the following, the invention will be described in greater detail by means of preferred embodiments and with reference to the accompanying drawings, in which
Figure 1 illustrates a system according to a first embodiment of the present solution;
Figure 2 is a signalling chart illustrating a method according to the first embodiment of the present solution;
Figure 3 illustrates a system according to a second embodiment of the present solution;
Figure 4 is a signalling chart illustrating a method according to the second embodiment of the present solution;
Figure 5 is a flow chart illustrating a method according to the first and second embodiment of the present solution.

### DETAILED DESCRIPTION OF THE INVENTION

In the following, embodiments of the present solution will be described with reference to a broadband telecommunications network, such as a network utilizing Ethernet, ADSL or WLAN technology. A broadband telecommunications system refers to a service or system using a transmission channel capable of supporting data rates that are higher than the primary rate. A broad frequency band allows a data transmission capacity of the order of 2 Mbit/s or more. This solution is not, however, meant to be restricted to these embodiments. The solution may be applied to any communications system providing data transmission services. Such systems include, 3G (3^{rd}-generation) mobile systems, such as UMTS (Universal mobile telecommunications system). The specifications of the telecommunications systems advance rapidly. This may require additional changes to the solution. For this reason, the terminology and the expressions used should be interpreted in their broadest sense since they are meant to illustrate the solution and not to restrict it. The relevant inventive aspect is the functionality concerned, not the network element or equipment where it is executed.

SIP (Session initiation protocol) is an application-layer control protocol for creating, modifying, and terminating sessions with one or more participants. The sessions may include Internet multimedia conferences, Internet telephone calls, multimedia distribution, etc. SIP proxy server is the first contact of the user terminal to the operator network. It retrieves information from the Internet to the workstations (i.e. SIP clients) and stores the information that the workstations frequently use to speed up the retrieval of the information and to enhance network security. The proxy speeds up the downloading of web pages located behind slow or congested network connections.

RADIUS (Remote authentication dial-in user service) is a client-server-based protocol used in IP (Internet protocol) networks for identification, access control, and statistics purposes. The RADIUS system may include several clients and several servers. The clients may request the server to carry out user verification, or they may receive information of the user rights or settings. The servers respond to the client requests or transmit requests to other servers.

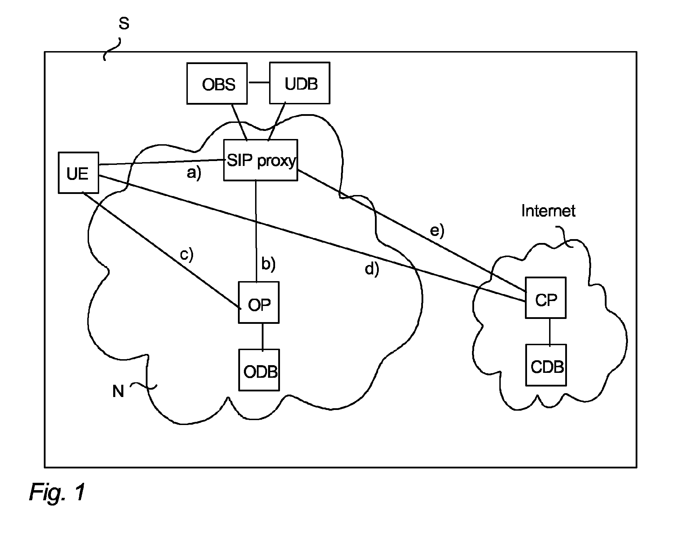

Figure 1 illustrates a system S according to a first embodiment of the present solution. The system S comprises a broadband data network N managed by a network operator. An end user is connected to the network N by means of a user terminal UE (i.e. a SIP client). The user equipment may be a terminal supporting the loading and execution of different functions related to services, such as a fixed or portable computer terminal or a mobile terminal. The network N comprises a SIP proxy server (or a SIP server) SIP proxy and a content platform OP managed by the network operator. Here the term "platform" refers to a basic server system on which different service applications can be managed, which act as gateways to the respective content services. The content platform OP has access to a content database ODB managed by the operator. Eventual content services provided by the operator are stored in the operator content database ODB. The SIP server has access to a user database UDB, and to a billing system OBS of the operator. The billing system OBS of the operator is responsible for the charging functions of the network for charging the customers for using the network. The user has a contract with the network operator for delivering services to the user.

An outside content provider may provide content services to the end user via the Internet. This is carried out by means of a content provider platform CP. The content provider platform CP has access to a content provider database CDB in which content, provided by the content provider, is stored. The Internet also enables the provision of foreign content services to the user. The content service may comprise a database or a file, or it may comprise some kind of live content, such as video. The content provider has a contract with the network operator for delivering content services utilizing the solution illustrated in Figure 1. This enables the network operator to pay compensation to the correct content provider, and also to control the nature of the provided content.

In Figure 1, a SIP signalling connection can be established a) between the user terminal and the SIP proxy server, and b) between the SIP proxy server and the operator content platform OP. The signalling between these components is carried out using the SIP protocol, for instance. A data connection for transmitting content data relating to the content service, can be established c) between the user terminal UE and operator content platform OP and d) between the user terminal UE and the content provider platform CP. In order to receive or transmit SIP signalling, the network element has to be able to apply the SIP protocol. According to the first embodiment, the content provider platform CP is able to apply the SIP protocol as illustrated in Figure 1, in which a SIP signalling connection can also be established e) between the SIP proxy server and the content provider platform CP.

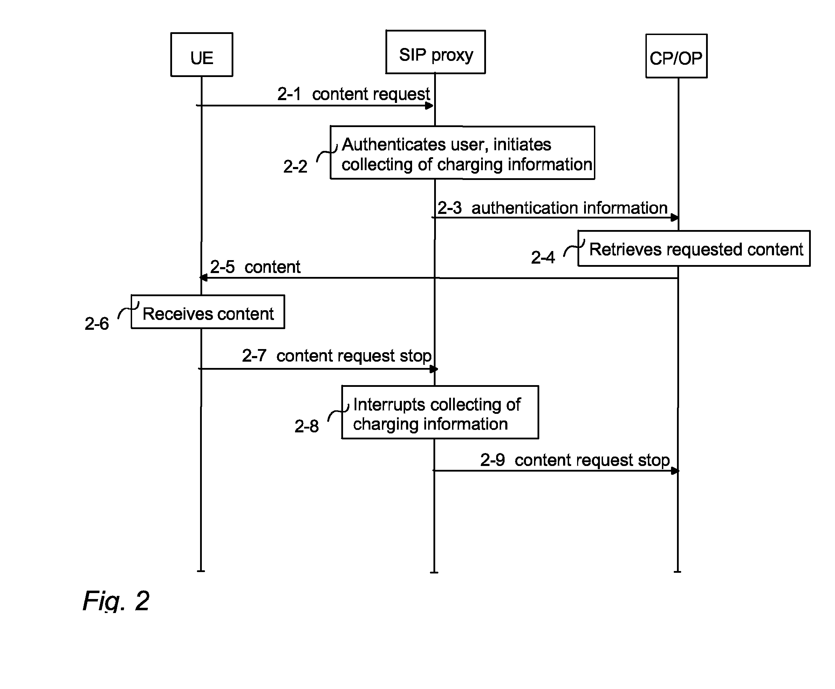

Figure 2 is a signalling chart illustrating the first embodiment of the present solution. In Figure 2, the user terminal UE, i.e. a SIP client, indicates that it wishes to gain access to a certain digital content, provided by a content provider, by transmitting a content request message 2-1 to the SIP proxy server. In practice, this means for example that a respective SIP service number of the content provider is called. Based on the received message, in step 2-2 the SIP proxy retrieves authentication information from the customer database UDB. The authentication information may comprise user-specific and/or content provider-specific information. In step 2-2, the SIP proxy further authenticates the user and identifies the content platform offering the content service on the basis of the content request and the authentication information. In the message 2-3, the SIP proxy transmits information of the content request and the authentication information to the content platform CP or OP. According to the first embodiment of the present solution, as the SIP protocol is also applied on the content platform of the outside content provider, the SIP proxy is able to transmit the authentication information directly to the appropriate content platform CP or OP, regardless of whether the content platform in question is managed by the network operator itself (in which case the network operator also acts as a content provider) or whether the content platform in question is managed by an outside content provider (operating in the Internet, for example). At this stage, the SIP proxy also initiates 2-2 ticketing, i.e. the recording of the particulars of the call for charging purposes by storing information of the time, the content service, the content provider and the user, for instance.

As the message 2-3 is received in step 2-4 on the content platform (which in this case is either a operator content platform OP or a content provider platform CP), the content platform is able to open a data connection with the user terminal UE for providing the requested content in message 2-5. As the user has received 2-6 the content it desired, it closes the connection by indicating this to the SIP proxy in message 2-7. After that, the SIP proxy stores 2-8 the end time of the data connection. The SIP proxy may further indicate the closing of the connection to CP or OP by means of message 2-9. By means of the starting time, end time and per second price of the connection, for example, the network operator is able to create charging data for charging the user for receiving the content. The information of the amount to be charged is delivered to the user by the network operator for instance in the form of a regular telephone bill or the like (not shown in Figure 2). The user makes the payment to the network operator, and the network operator transfers an agreed share of the payment to the content provider.

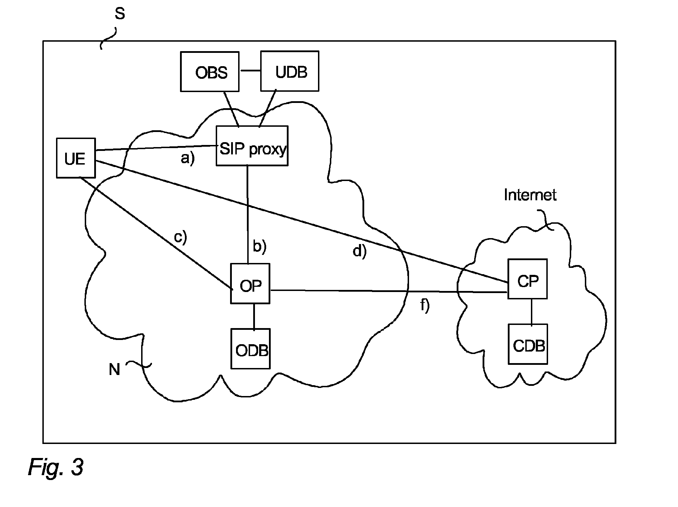

Figure 3 illustrates the system S according to a second embodiment of the present solution. The system S comprises a broadband data network N managed by a network operator. An end user is connected to the network N by means of user equipment UE (i.e. a SIP client). The user equipment UE may be a terminal supporting the loading and execution of different functions related to services, such as a fixed or portable computer terminal or a mobile terminal. The network N comprises a SIP proxy server (or a SIP server) SIP proxy and a content platform OP managed by the network operator. Here the term "platform" refers to a basic server system on which different service applications can be managed, which act as gateways to the respective content services. The content platform OP has access to a content database ODB managed by the operator. Eventual content services provided by the operator are stored in the operator content database ODB. The SIP server has access to a user database UDB, and to a billing system OBS of the operator. The billing system OBS of the operator is responsible for charging functions of the network N for charging the customers for using the network. The user has a contract with the network operator for delivering services to the user.

A content provider may provide content services to the end user via the Internet. This is carried out by means of a content provider platform CP. The content provider platform CP has access to a content provider database CDB in which content, provided by the content provider, is stored. The Internet may refer to a national Internet but also to the international Internet so as to be able to provide foreign content services to the user. The content service may comprise a database or a file, or it may comprise some kind of live content, such as video. The content provider has a contract with the network operator for delivering content services utilizing the solution illustrated in Figure 3. This enables the network operator to pay compensation to the correct content provider, and also to control the nature of the provided content.

In Figure 3, a SIP signalling connection can be established a) between the user terminal UE and the SIP proxy server and b) between the SIP proxy server and the operator content platform. The signalling between these components is carried out using the SIP protocol, for example. A data connection for transmitting content data relating to the content service can be established c) between the user terminal UE and the operator content platform OP and d) between the user terminal UE and the content provider platform CP. In order to receive or transmit SIP signalling, the network element has to be able to apply the SIP protocol. According to the second embodiment, the content provider platform CP is not able to apply the SIP protocol. This is illustrated in Figure 3 in which a connection can be established f) between the operator content platform OP and the content provider platform utilizing RADIUS signalling, for example. Thus the SIP proxy server has no direct connection with the content provider platform CP, but instead the signalling between the SIP proxy server and the content provider platform CP is carried out via the operator content platform OP. In this case SIP signalling can be used b) between the SIP proxy server and the operator content platform OP, and RADIUS signalling can be used f) between the operator content platform OP and the content provider platform CP.

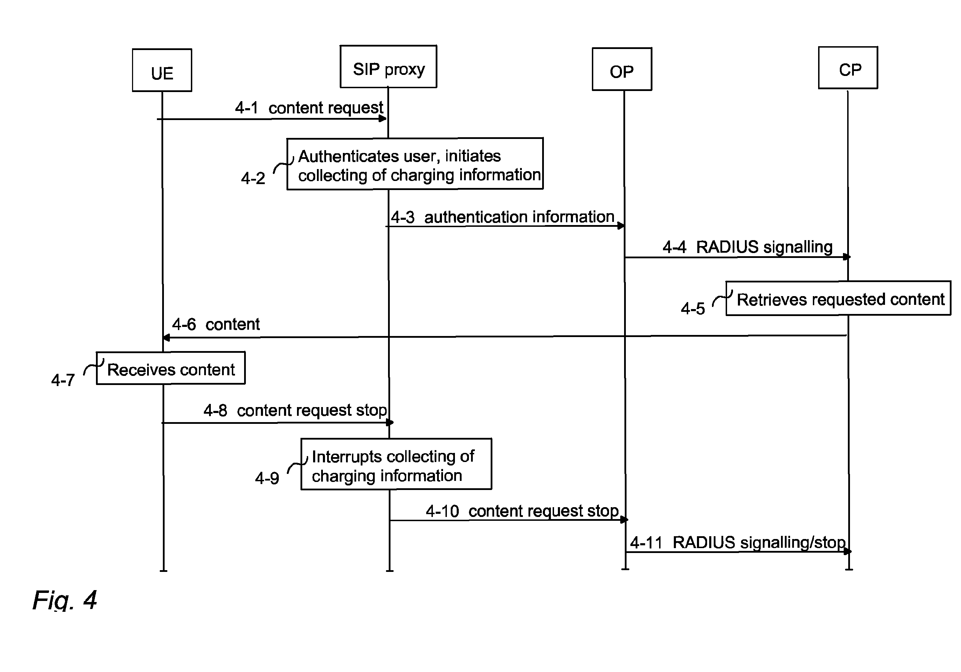

Figure 4 is a signalling chart illustrating the second embodiment of the present solution. In Figure 4, the user terminal UE, i.e. a SIP client, indicates that it wishes to gain access to a certain digital content, provided by a content provider, by transmitting a content request message 4-1 to SIP proxy. In practice, this means for example that a respective SIP service number of the content provider is called. Based on the received message, in step 4-2, the SIP proxy retrieves authentication information from the customer database UDB. The authentication information may comprise user-specific and/or content provider-specific information. In step 4-2, the SIP proxy further authenticates the user and identifies the content platform offering the content service. At this stage, the SIP proxy also initiates 4-2 the ticketing, i.e. the recording of particulars of the call for charging purposes by storing information of the time, the content service, the content provider and the user, for instance. In message 4-3, the SIP proxy transmits information of the content request and the authentication information to the content platform OP. According to the second embodiment, as the SIP protocol is not applied on the content platform of the outside content provider, SIP proxy is not able to transmit the authentication i n-formation directly to the appropriate content platform CP if the content platform in question is managed by an outside content provider (operating in the Internet, for example). If the content platform in question is managed by the network operator itself, the process continues as described above in connection with Figure 3. The content platform OP of the network operator transmits 4-4 the authentication information and the information of the content request further to the content platform CP of the outside content provider. The signalling between the content platform OP of the network operator and the content platform CP of the service provider may be carried out utilizing RADIUS signalling, for instance.

As message 4-4 is received in step 4-5 in the content provider platform CP, the content platform CP is able to open a data connection with the user terminal UE for providing the requested content in message 4-6. As the user has received 4-7 the content it desired, it closes the connection by indicating this to the SIP proxy in message 4-8. After that the SIP proxy stores 4-9 the end time of the data connection. The SIP proxy may further indicate the closing of the connection to CP via OP by means of messages 4-10 and 4-11. By means of the starting time, end time and per second price of the connection for example, the network operator is able to create charging data for charging the user for receiving the content. The information of the amount to be charged is delivered to the user by the network operator in the form of a regular telephone bill or the like (not shown in Figure 4). The user makes the payment to the network operator, and the network operator transfers an agreed share of the payment to the content provider.

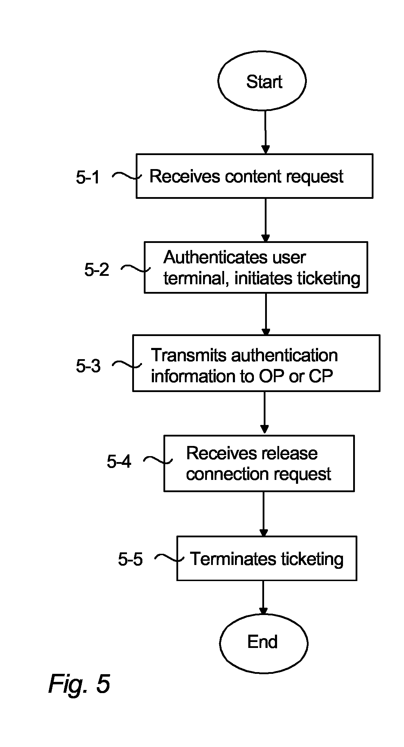

Figure 5 is a flow chart illustrating the functions of the SIP proxy according to the first and second embodiments of the present solution. In step 5-1, the SIP proxy receives a content request from the user terminal indicating that the user wishes to gain access to a certain digital content provided by a content provider. Based on the received message, in step 5-2, the SIP proxy retrieves authentication information from the customer database. The authentication information may comprise user-specific and/or content provider-specific information. In step 5-2, the SIP proxy further authenticates the user and identifies the content platform offering the content service on the basis of the content request and the authentication information. At this stage, the SIP proxy also initiates the ticketing, i.e. the recording of the particulars of the call for charging purposes by storing information of the time, the content service, the content provider and the user, for example. In step 5-3, SIP proxy transmits information of the content request and the authentication information to the appropriate content platform CP or OP as described above in connection with Figures 2 or 4. In step 5-4, the SIP proxy receives a connection release request from the user terminal. After that the SIP proxy stores 5-5 the end time of the data connection between the user terminal and the content platform. In step 5-5, the SIP proxy may further indicate the closing of the connection to CP or OP in question.

In the first embodiment, the SIP proxy recognizes the requested content platform OP, CP, and the user is authenticated by means of SIP signalling. After that the process is transferred to a process between the content platform OP, CP and the user terminal UE.

In the second embodiment, the content provider platform CP is a "virtual subsystem" of the network operator, and the operator content platform OP utilizes RADIUS signalling in order to indicate to the content provider platform CP that the user terminal UE has been authenticated.

According to yet another embodiment of the invention, the network operator does not reveal the identity of the user to the content provider when transferring the share of the payment to the content provider.

The user charging in the billing system is typically based on the recorded ticketing information and on the rules of the billing system for processing this information. The various pricing mechanisms used in modern dial-it services may be utilized when implementing the solution of the present application.

The signalling messages and steps shown in Figures 2, 4 and 5 are not in an absolute chronological order, and they can be executed in a different order from the given one. Other signalling messages can be transmitted and/or other functions can be carried out between the messages and/or steps. The signalling messages are only examples and may include only some of the aforementioned information. The messages may also include some other information. It is not essential for the invention which signalling messages the information is transmitted in or which functions are used, and it is also possible to use other messages or functions than those described above.

In addition to the prior art devices, the system, network nodes or terminals implementing the operation according to the invention also comprise means for receiving, generating and transmitting relevant SIP or RADIUS signalling messages. The existing network nodes and terminals comprise processors and memory, which can be used in the functions according to the invention. All the modifications and configurations needed to implement the invention can be carried out by means of software routines that can be added or updated and/or routines contained in application-specific integrated circuits (ASIC), and/or programmable circuits, such as an electrically programmable logic device EPLD or a field programmable gate array FPGA.

It will be obvious to a person skilled in the art that, as the technology advances, the inventive concept can be implemented in various ways. The invention and its embodiments are not limited to the examples described above but may vary within the scope of the claims.

## Claims

1. A method for registering user invoicing data of the usage of digital content service offered by a content provider in a telecommunications system (S) comprising
a telecommunications network (N) managed by a network operator, the network (N) comprising a server unit (SIP proxy) managed by the network operator;
at least one content platform (CP, OP) managed by a content provider operating within the network (N) or by a content provider operating outside the network (N); and
a user terminal (UE) connected to the network (N);
**characterized by** the steps of
receiving (2-1, 4-1, 5-1), in the server unit (SIP proxy), a content request message from the user terminal (UE), said request indicating the content provider of the requested content service; and
authenticating (2-2, 4-2, 5-2), in the server unit (SIP proxy), said user terminal (UE) on the basis of said content request and a predefined contract between the user and the network operator;
wherein, in case of a successful authentication of the user terminal (UE), the method further comprises steps of
transmitting (2-3, 4-3, 4-4, 5-3), from the server unit (SIP proxy), directly or indirectly to the content platform (CP, OP) an indication of the authentication of the user terminal and of the respective content request;
establishing (2-5, 4-6), based on said indication, a data connection between the user terminal (UE) and the content platform (OP, CP) for providing the requested service to the user; and
recording, in the server unit (SIP proxy), user-specific information of the established data connection in order to generate a respective charging record.

2. A method according to claim 1, **characterized by** authenticating the user terminal (UE) by utilizing the Session Initiation Protocol SIP.

3. A method according to claim 1 or 2, **characterized by** transmitting (3-3, 4-3) from the server unit (SIP proxy) to the content platform (OP, CP) an indication of the authentication of the user terminal and the respective content request by utilizing the SIP protocol.

4. A method according to claim 1, 2 or 3, **characterized by** transmitting (4-3, 4-4) from the content platform (OP) managed by a content provider within the network (N) to the content platform (CP) managed by a content provider outside the network (N) an indication of the authentication of the user terminal and the respective content request by utilizing the RADIUS protocol.

5. A method according to any of the preceding claims 1 to 4, **characterized by** including the charging record into a telephone bill of the respective user.

6. A method according to any of the preceding claims 1 to 5, **characterized by** the network operator also acting as a content provider.

7. A method according to any of the preceding claims 1 to 6, **characterized by** charging the user for the use of the content service without revealing the identity of the user to the content provider.

8. A telecommunications system (S) comprising
a telecommunications network (N) managed by a network operator, the network (N) comprising a server unit (SIP proxy) managed by the network operator;
at least one content platform (CP, OP) managed by a content provider operating within the network (N) or by a content provider operating outside the network (N); and
a user terminal (UE) connected to the network (N);
**characterized in that** the system is, in response to receiving a content request from the user terminal (UE), configured to
authenticate, in the server unit (SIP proxy), said user terminal (UE) on the basis of said content request and a predefined contract between the user and the network operator;
transmit, in case of a successful authentication of the user terminal, from the server unit (SIP proxy) directly or indirectly to the relevant content platform (CP, OP) an indication of the authentication of the user terminal and of the respective content request;
establish, based on the indication, a data connection between the user terminal (UE) and the content platform (OP, CP) for providing the requested service to the user; and
record, in the server unit (SIP proxy), user-specific information of the established data connection in order to generate a respective charging record.

9. A system according to claim 8, **characterized in that** the system is configured to transmit the indication of the authentication of the user terminal and of the respective content request by utilizing SIP signalling.

10. A system according to claim 8 or 9, **characterized in that** the system is configured to transmit the indication of the authentication of the user terminal and of the respective content request by utilizing RADIUS signalling.

11. A server unit managed by a network operator in a telecommunications system comprising
a telecommunications network (N) comprising a server unit (SIP proxy) managed by the network operator;
at least one content platform (CP, OP) managed by a content provider operating within the network (N) or by a content provider operating outside the network (N); and
a user terminal (UE) connected to the network (N);
**characterized in that** the server unit is, in response to receiving a content request from the user terminal (UE), arranged to
authenticate said user terminal (UE), on the basis of said content request and a predefined contract between the user and the network operator;
transmit, in case of a successful authentication of the user terminal directly or indirectly to the relevant content platform (CP, OP), an indication of the authentication of the user terminal and of the respective content request;
and the server unit (SIP proxy) is also, in response to receiving a content terminating request from the user terminal (UE), arranged to
record user-specific charging information in order to generate a respective charging record based on the content request and the content terminating request.

12. A server unit according to claim 11, **characterized in that** the server unit is a SIP server.

13. A server unit according to claim 11 or 12, **characterized in that** the server unit is a SIP proxy server.
